# EUROPÄISCHE PATENTSCHRIFT

(11) **EP 2 417 378 B1**
(45) Veröffentlichungstag und Bekanntmachung des Hinweises auf die Patenterteilung: **17.07.2013**
(21) Anmeldenummer: 10713888.5
(22) Anmeldetag: 31.03.2010
(51) Int. Cl.: F16H 61/04, F16H 63/50, F16H 61/686

(54) **VERFAHREN ZUM BETREIBEN EINES FAHRZEUGANTRIEBSSTRANGES**
METHOD FOR OPERATING A VEHICLE DRIVE TRAIN
PROCÉDÉ POUR FAIRE FONCTIONNER UNE CHAÎNE CINÉMATIQUE DE VÉHICULE À MOTEUR

(30) Priorität: 06.04.2009 DE 102009002206
(43) Veröffentlichungstag der Anmeldung: 15.02.2012
(73) Patentinhaber: ZF Friedrichshafen AG, 88038 Friedrichshafen (DE)
(72) Erfinder: ARNOLD, Joerg, 88090 Immenstaad (DE); STEINHAUSER, Klaus, 88079 Kressbronn (DE); HERBETH, Valentine, 88045 Friedrichshafen (DE); POPP, Christian, 88079 Kressbronn (DE)
(86) Internationale Anmeldenummer: PCT/EP2010/054311
(87) Internationale Veröffentlichungsnummer: WO 2010/115806

(56) Entgegenhaltungen:
- EP-A2- 1 344 965
- WO-A2-2004/033246
- DE-A1- 10 244 023
- DE-C1- 19 844 783
- US-A- 5 904 068

## Beschreibung

Die Erfindung betrifft ein Verfahren zum Betreiben eines Fahrzeugantriebsstranges mit einer Antriebsmaschine und einer Getriebeeinrichtung während einer Schaltung in der Getriebeeinrichtung gemäß der im Oberbegriff des Patentanspruches 1 näher definierten Art.

Bei aus der Praxis bekannten Getriebeeinrichtungen, wie Automatgetrieben, werden zunehmend reibschlüssige Schaltelement zur Reduzierung von im Bereich der reibschlüssigen Schaltelemente auftretenden Schleppverluste durch formschlüssige Schaltelemente, wie Klauenschaltelemente oder dergleichen, ersetzt. Problematisch dabei ist jedoch, dass ein während einer Schaltung abzuschaltendes formschlüssiges Schaltelement während ungünstiger Betriebszustände eines Fahrzeugantriebsstranges verspannt werden kann und nicht in gewünschtem Umfang abschaltbar ist.

Ein derartiges Verspannen eines formschlüssigen Schaltelementes tritt beispielsweise während Schaltungen auf, während welchen das formschlüssige Schaltelement aus einem Kraftfluss eines Fahrzeugantriebsstranges abzuschalten und gleichzeitig ein reibschlüssiges Schaltelement zur Darstellung der angeforderten neuen Übersetzung in einer Getriebeeinrichtung in den Kraftfluss des Fahrzeugantriebsstranges zuzuschalten ist und das reibschlüssige Schaltelement vor einem Abschaltzeitpunkt des formschlüssigen Schaltelementes eine das Öffnen des formschlüssigen Schaltelementes verhindernde Übertragungsfähigkeit aufweist.

Während eines derartigen Betriebszustandsverlaufes eines Fahrzeugantriebsstranges bzw. einer Getriebeeinrichtung besteht die Möglichkeit, dass im Bereich der Getriebeeinrichtung ein oder mehrere Radsätze aufgrund einer Überbestimmung verspannt oder verblockt werden, was mit herkömmlichen Vorgehensweisen durch einen Abbruch der Schaltung auflösbar ist oder zu nicht reproduzierbaren Schaltzeiten führt.

Alternativ hierzu besteht die Möglichkeit, ein durch die Zuschaltung des reibschlüssigen Schaltelementes verursachtes Verspannen des formschlüssigen Schaltelementes sowie eine Überbestimmung im Bereich der Getriebeeinrichtung während einer Schaltung dadurch zu vermeiden, dass die Übertragungsfähigkeit des zuzuschaltenden reibschlüssigen Schaltelementes erst dann angehoben wird, wenn das formschlüssige Schaltelement geöffnet ist.

Die gattungsbildende EP 1344965 A2 zeigt ein Verfahren zum Betreiben eines Antriebsstranges eines Fahrzeuges mit einer Getriebeeinrichtung, die ein reibschlüssiges Schaltelement und mehrere formschlüssige Schaltelemente umfasst. Bei einer Schaltung wird ein formschlüssiges Schaltelement abgeschaltet und ein reibschlüssiges Schaltelement zugeschaltet. Beim Ermitteln eines geschlossenen Betriebszustandes des abzuschaltenden formschlüssigen Schaltelements wird nach Ablauf eines vordefinierten Zeitraums die Schaltkraft erhöht.

Mit einer solchen Vorgehensweise sind Schaltungen ebenfalls nicht in gewünschten Umfang innerhalb vordefinierter Schaltzeiten durchführbar, weshalb Getriebeeinrichtungen auch nicht mit einem reproduzierbaren Schaltverhalten betreibbar sind.

Der vorliegenden Erfindung liegt daher die Aufgabe zugrunde, ein Verfahren zum Betreiben eines Fahrzeugantriebsstranges mit einer Antriebsmaschine und einer Getriebeeinrichtung während einer Schaltung in der Getriebeeinrichtung zur Verfügung zu stellen, mittels dem Schaltungen, während den zumindest ein formschlüssiges Schaltelement abzuschalten und wenigstens ein reibschlüssiges Schaltelement zuzuschalten ist, innerhalb vordefinierter Schaltzeiten und mit reproduzierbarem Schaltverhalten durchführbar sind.

Erfindungsgemäß wird diese Aufgabe mit einem Verfahren mit den Merkmalen des Patentanspruches 1 gelöst.

Bei dem erfindungsgemäßen Verfahren zum Betreiben eines Fahrzeugantriebsstranges mit einer Antriebsmaschine und einer Getriebeeinrichtung während einer Schaltung in der Getriebeeinrichtung, bei der wenigstens ein formschlüssiges Schaltelement abgeschaltet und zumindest ein reibschlüssiges Schaltelement zugeschaltet wird, wird zum Zeitpunkt der Schaltanforderung eine Schaltzeitüberwachung sowie eine Überwachung einer Getriebeeingangsdrehzahl oder hierzu äquivalenten Drehzahl gestartet. Bei einer Abweichung der überwachten Drehzahl von einer zu der in der Getriebeeinrichtung auszulegenden Übersetzung äquivalenten Synchrondrehzahl wird ein Öffnen des formschlüssigen Schaltelementes erkannt.

Erfindungsgemäß wird bei Ermitteln eines geschlossenen Betriebszustandes des abzuschaltenden formschlüssigen Schaltelementes nach Ablauf eines vordefinierten Zeitraumes ausgehend vom Zeitpunkt der Schaltanforderung ein aktuelles Antriebsmoment der Antriebsmaschine während eines Motoreingriffes auf ein Drehmomentwertniveau geführt, welches einer Differenz aus dem aktuellen Getriebeeingangsmoment oder einem hierzu äquivalenten Drehmomentwert und einem über das zuzuschaltende reibschlüssige und schlupfend betriebene Schaltelement führbaren Drehmomentwert plus einem Drehmoment-Offsetwert entspricht. Ebenfalls zum Zeitpunkt der Schaltanforderung geht das zu öffnende formschlüssige Schaltelement zumindest für einen kurzen Zeitraum in einen wenigstens annähernd lastfreien Betriebszustand über. Hierbei wird die Übertragungsfähigkeit des zuzuschaltenden reibschlüssigen Schaltelementes bei Vorliegen einer Schaltanforderung und bei geschlossenem formschlüssigen Schaltelement im Zugbetrieb des Fahrzeugantriebsstranges auf ein zu dem Getriebeeingangsmoment äquivalentes Zug-Drehmomentwertniveau geführt und bei Auftreten eines Lastwechsels im Fahrzeugantriebsstrang vorzugsweise sprungartig auf ein zu dem aktuellen Getriebeeingangsmoment äquivalentes Schub-Drehmomentwertniveau eingestellt. Hierbei wird das reibschlüssige Schaltelement zumindest bei geschlossenem formschlüssigem Schaltelement schlupfend betrieben.

Durch die erfindungsgemäße Vorgehensweise wird ein eventueller Verspannungszustand im Bereich der Getriebeeinrichtung mit geringem Betätigungsaufwand aufgelöst und das formschlüssige Schaltelement für einen für das sichere Öffnen des formschlüssigen Schaltelementes gewährleistenden Zeitraum in einen wenigstens annähernd lastfreien Betriebszustand geführt und gehalten.

Bei einer vorteilhaften Variante des Verfahrens nach der Erfindung wird die Übertragungsfähigkeit des reibschlüssigen Schaltelementes bei Vorliegen einer Schaltanforderung bei geschlossenem formschlüssigen Schaltelement wenigstens annähernd auf ein dem Getriebeeingangsmoment entsprechendes Niveau angehoben, zu dem das reibschlüssige Schaltelement schlupfend betrieben wird. Damit besteht auf einfache Art und Weise die Möglichkeit, die angeforderte Schaltung mit kurzer Schaltzeit und im Wesentlichen zugkraftunterbrechungsfrei durchführen zu können.

Das aktuelle Getriebeeingangsmoment wird auf kostengünstige Art und Weise bei einer weiteren vorteilhaften Variante des erfindungsgemäßen Verfahrens ohne zusätzlichen Drehmomentsensor über ein aktuelles Drehmoment der Antriebsmaschine bestimmt.

Die Übertragungsfähigkeit des reibschlüssigen Schaltelementes wird bei einer Variante des erfindungsgemäßen Verfahrens bei Auftreten eines Lastwechsels im Fahrzeugantriebsstrang auf ein vorzugsweise wenigstens annähernd dem aktuellen Getriebeeingangsmoment entsprechendes Drehmomentwertniveau eingestellt und das reibschlüssige Schaltelement wird schlupfend betrieben, um einen Verspannungszustand im Bereich der Getriebeeinrichtung zu vermeiden und die angeforderte Zuschaltung innerhalb einer vordefinierten Schaltzeit durchführen zu können.

Zur Einhaltung einer vordefinierten Schaltzeit, innerhalb der die angeforderte Schaltung durchzuführen ist, wird der Drehmoment-Offsetwert bei einer Variante des Verfahrens nach der Erfindung in Abhängigkeit des Betriebszustandes des Fahrzeugantriebsstranges variiert. Dabei ist über das Variieren des Drehmoment-Offsetwertes der Gradient des Verlaufs des am formschlüssigen Schaltelement anliegenden Drehmomentwertes einstellbar und der Zeitpunkt sowie die Dauer, zu dem das formschlüssige Schaltelement in wenigstens annähernd lastfreiem Betriebszustand vorliegt, betriebszustandsabhängig beeinflussbar.

Bei Erkennen eines geöffneten Betriebszustandes des formschlüssigen Schaltelementes wird das reibschlüssige Schaltelement bei einer weiteren Variante des erfindungsgemäßen Verfahrens in einen vollständig geschlossenen Betriebszustand überführt.

Der Motoreingriff ist bei Erkennen eines geöffneten Betriebszustandes des formschlüssigen Schaltelementes zurücknehmbar, um den Fahrzeugantriebsstrang in den betriebszustandsabhängig angeforderten Betriebszustand überzuführen. Dies ist insbesondere dann von Vorteil, wenn sich der Fahrzeugantriebsstrang während einer Bergabfahrt im Schubbetrieb befindet und am Abtrieb ein antriebsmaschinenseitiges Bremsmoment zur Verfügung gestellt werden soll, das aufgrund des für das Öffnen des formschlüssigen Schaltelements ausgelösten Motoreingriffes zeitweise nicht zur Verfügung stellbar ist.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Es zeigt:
- Fig. 1: eine stark schematisierte Darstellung eines Fahrzeuges mit einem eine Getriebeeinrichtung und eine Antriebsmaschine aufweisenden Fahrzeugantriebsstrang;
- Fig. 2: ein Räderschema einer Getriebeeinrichtung mit mehreren reib- und formschlüssigen Schaltelementen zum Darstellen verschiedener Übersetzungen;
- Fig. 3: ein Schaltschema der Getriebeeinrichtung gemäß Fig. 1;
- Fig. 4: mehrere Verläufe verschiedener Betriebszustandsparameter der Getriebeeinrichtung gemäß Fig. 1 während einer Zughochschaltung; und
- Fig. 5: mehrere Verläufe verschiedener Betriebszustandsparameter der Getriebeeinrichtung gemäß Fig. 1 während einer Hochschaltung mit einem Lastwechsel im Fahrzeugantriebsstrang.

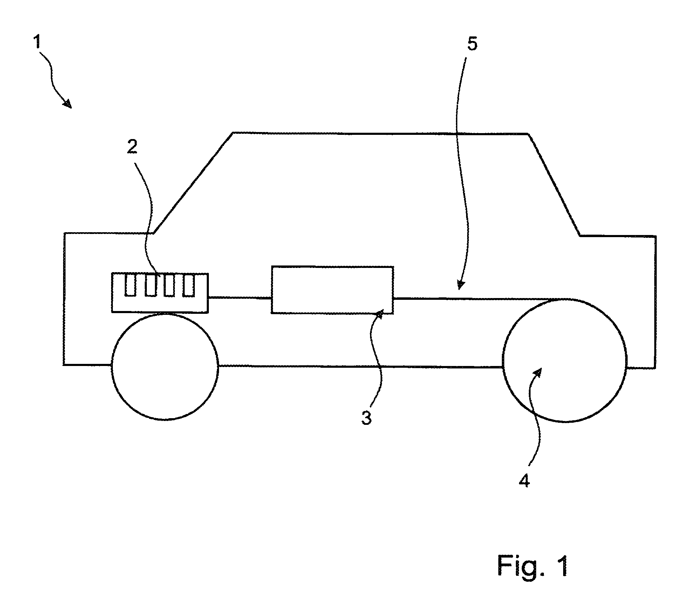

Fig. 1 zeigt eine stark schematisierte Darstellung eines Fahrzeuges 1, welches mit einer vorliegend als Brennkraftmaschine ausgebildeten Antriebsmaschine 2, einer als Automatgetriebe ausgeführten Getriebeeinrichtung 3 und einen Abtrieb 4 aufweisenden Fahrzeugantriebsstrang 5 ausgebildet ist. Grundsätzlich kann die Getriebeeinrichtung jedes aus der Praxis bekannte Automatgetriebe sein, welches mit reibschlüssigen und formschlüssigen Schaltelementen ausgeführt ist. Die Schaltelemente der Getriebeeinrichtung 3 werden vorliegend von einer von der Antriebsmaschine 2 angetriebenen Getriebehauptpumpe betriebszustandsabhängig mit Hydraulikfluid versorgt und bei entsprechender Betätigung von einem geöffneten in einen geschlossenen Zustand oder aus einem geschlossenen Betriebszustand in einen geöffneten Betriebszustand überführt, um einen aktuell angeforderten Betriebszustand der Getriebeeinrichtung 3 darstellen zu können.

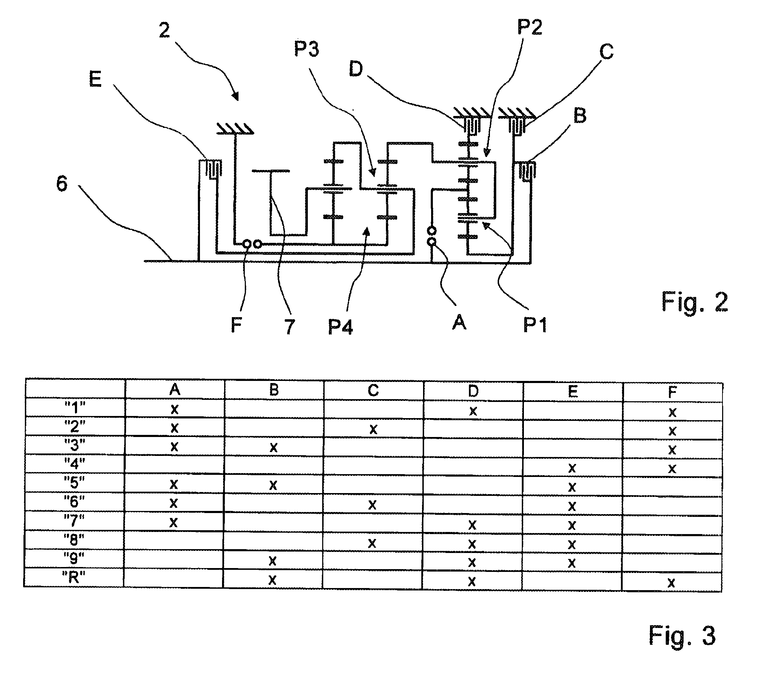

In Fig. 2 ist ein Räderschema eines Ausführungsbeispieles der Getriebeeinrichtung 3 bzw. eines Mehrstufengetriebes dargestellt, welches grundsätzlich aus der unveröffentlichten deutschen Patentanmeldung DE 10 2008 000 429.4 der Anmelderin bekannt ist. Die Getriebeeinrichtung 3 umfasst eine Antriebswelle 6 und eine Abtriebswelle 7, welche in in dem Fahrzeug 1 montierten Zustand mit dem Abtrieb 4 des Fahrzeuges 1 verbunden ist, während die Antriebswelle 6 mit einer Antriebsmaschine 2 wirkverbunden ist.

Darüber hinaus umfasst die Getriebeeinrichtung 3 vier Planetenradsätze P1 bis P4, wobei der erste und der zweite Planetenradsatz P1, P2, die vorzugsweise als Minus-Planetenradsätze ausgebildet sind, einen schaltbaren Vorschaltradsatz bilden, während der dritte und der vierte Planetenradsatz P3, P4 den Hauptradsatz darstellen. Zusätzlich umfasst die Getriebeeinrichtung 3 sechs Schaltelemente A bis F, wovon die Schaltelemente B, D und E als Bremsen und die Schaltelemente A, C und F als Schaltkupplungen ausgeführt sind.

Mit den Schaltelementen A bis F ist über die in Fig. 3 näher dargestellte Schaltlogik ein selektives Schalten von neun Vorwärtsgängen "1" bis "9" und einem Rückwärtsgang "R" realisierbar, wobei bis auf die vierte Übersetzungsstufe "4" zur Darstellung einer Übersetzung in der Getriebeeinrichtung 3 bzw. zum Herstellen eines Kraftflusses in der Getriebeeinrichtung 3 jeweils gleichzeitig drei Schaltelemente in einen geschlossenen Betriebszustand zu führen bzw. zu halten sind.

Die Schaltelemente A und F sind vorliegend als formschlüssige Schaltelemente ausgebildet, um im Betrieb der Getriebeeinrichtung 3 im Vergleich zu Getriebeeinrichtungen, die nur mit reibschlüssigen Schaltelementen ausgebildet sind, durch geöffnete reibschlüssige Schaltelemente verursachte Schleppmomente zu reduzieren.

Das nachbeschriebene erfindungsgemäße Verfahren wird bei Schaltungen angewendet, bei welchen jeweils wenigstens ein formschlüssiges Schaltelement abgeschaltet und mindestens ein reibschlüssiges Schaltelement in den Kraftfluss der Getriebeeinrichtung 3 zugeschaltet wird. Die formschlüssigen Schaltelemente A und F der betrachteten Getriebeeinrichtung 3 können als Klauenkupplungen mit oder ohne zusätzliche Synchronisierung ausgebildet sein.

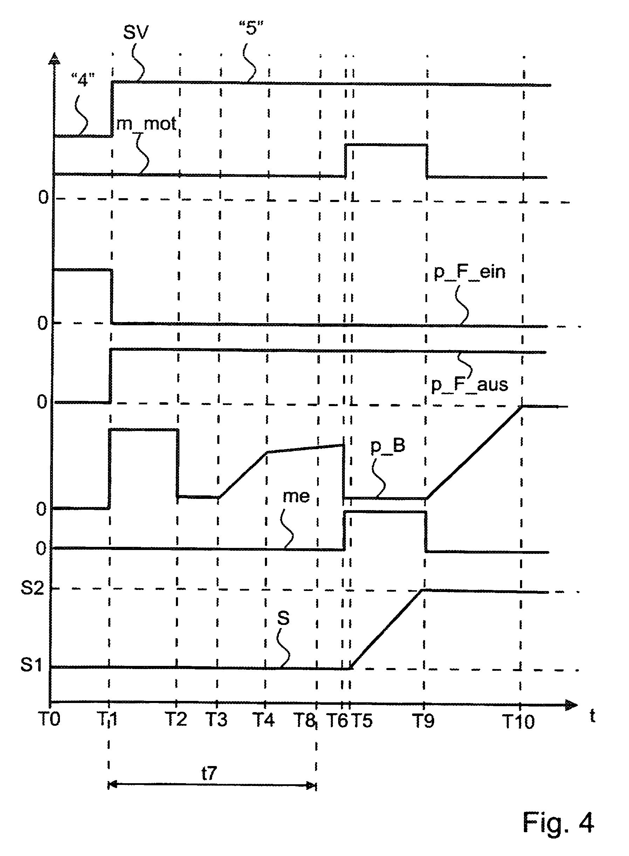

Nachfolgend wird die Wirkungsweise des erfindungsgemäßen Verfahrens zunächst anhand der in Fig. 4 über der Zeit t näher dargestellten Verläufe mehrerer Betriebszustandsparameter der Getriebeeinrichtung 3 gemäß Fig. 2 näher erläutert.

Bei dem den in Fig. 4 dargestellten Verläufen der Betriebszustandsparameter der Getriebeeinrichtung 3 zugrunde liegenden Betriebszustandsverlauf ist zu einem Zeitpunkt T0 in der Getriebeeinrichtung 3 die vierte Übersetzungsstufe "4" eingelegt. Zur Darstellung der vierten Übersetzungsstufe "4" werden die Schaltelemente E und F in geschlossenem Zustand gehalten, während die Schaltelemente A bis D geöffnet sind.

Zu einem Zeitpunkt T1 wird eine Schaltanforderung für eine Hochschaltung ausgehend von der vierten Übersetzungsstufe "4" in die fünfte Übersetzungsstufe "5" generiert, weshalb ein Schaltverlauf SV vom Niveau der vierten Übersetzungsstufe "4" sprungartig auf das Niveau der fünften Übersetzungsstufe "5" umschaltet.

Zur Durchführung der angeforderten Hochschaltung von der vierten Übersetzungsstufe "4" in die fünfte Übersetzungsstufe "5" sind das formschlüssige Schaltelement F zu öffnen bzw. aus dem Kraftfluss der Getriebeeinrichtung 3 abzuschalten und sowohl das formschlüssige Schaltelement A als auch das reibschlüssige Schaltelement B in den Kraftfluss der Getriebeeinrichtung 3 zuzuschalten bzw. vom geöffneten Betriebszustand jeweils in den geschlossenen Betriebszustand zu überführen. Deshalb wird das formschlüssige Schaltelement F bis zum Zeitpunkt T1 mit einer dem Schließdruckwert, zu dem das Schaltelement F vollständig geschlossen ist, entsprechenden und in Schließrichtung des formschlüssigen Schaltelementes F angreifenden Betätigungsdruckkomponente p_F_ein beaufschlagt, während das reibschlüssige Schaltelement B mit einem Betätigungsdruck p_B beaufschlagt wird, der im Wesentlichen gleich Null ist. Das weitere formschlüssige Schaltelement A wird ebenfalls in nicht näher dargestellter Art und Weise bis zum Zeitpunkt T1 mit einem Betätigungsdruck, der im Wesentlichen gleich Null ist, beaufschlagt.

Zum Zeitpunkt T1, zu dem die Schaltanforderung für die Hochschaltung von der vierten Übersetzungsstufe "4" in die fünfte Übersetzungsstufe "5" ergeht, wird die in Schließrichtung des formschlüssigen Schaltelementes F wirkende Betätigungsdruckkomponente p_F_ein im Wesentlichen auf Null abgesenkt, während eine in Öffnungsrichtung des formschlüssigen Schaltelementes F an diesem angreifende weitere Betätigungsdruckkomponente p_F_aus von Null im Wesentlichen auf ein Öffnungsdruckniveau des formschlüssigen Schaltelementes F angehoben wird.

Gleichzeitig wird das reibschlüssige Schaltelement B ab dem Zeitpunkt T1 mit einem bis zu einem zweiten Zeitpunkt T2 andauernden Schnellfüllpuls und einer sich daran bis zu einem weiteren Zeitpunkt T3 erstreckenden Füllausgleichsphase für die Zuschaltung in den Kraftfluss des Fahrzeugantriebsstranges 5 vorbereitet und das formschlüssige Schaltelement A wird durch entsprechende Betätigung zunehmend geschlossen. Dabei liegt das reibschlüssige Schaltelement B zum Zeitpunkt T3 in einem Betriebszustand vor, zu dem im Wesentlichen über das reibschlüssige Schaltelement B noch kein Drehmoment führbar ist, jedoch eine Drucksteigerung des Betätigungsdruckes p_B ausgehend von Füllausgleichsdruckniveau zu einem Anstieg der Übertragungsfähigkeit des reibschlüssigen Schaltelementes B führt.

Um die angeforderte Hochschaltung in der Getriebeeinrichtung 3 durchzuführen, wird ab dem Zeitpunkt T3 der Betätigungsdruck p_B vom Füllausgleichsniveau über eine erste Druckrampe bis zu einem Zeitpunkt T4 angehoben und ein vorliegend im Zugbetrieb des Fahrzeugantriebsstranges 5 von der Antriebsmaschine 2 in Richtung des Abtriebs 4 geführtes Drehmoment der Antriebsmaschine 2 zunehmend über das reibschlüssige Schaltelement B geführt, während der andere Teil des Drehmomentes der Antriebsmaschine 2 über das nach wie vor geschlossene formschlüssige Schaltelement F geführt wird.

Ab dem Zeitpunkt T4 wird der Betätigungsdruck p_B des reibschlüssigen Schaltelementes B entlang einer sich an die erste Druckrampe anschließenden zweiten flacheren Druckrampe weiter angehoben und die Übertragungsfähigkeit des reibschlüssigen Schaltelementes p_B weiter gesteigert.

Zusätzlich wird zum Zeitpunkt T1 der Schaltanforderung eine Überwachung der Schaltzeit t sowie eine Überwachung einer Getriebeeingangsdrehzahl oder einer hierzu äquivalenten Drehzahl gestartet. Bei einer Abweichung der überwachten Drehzahl von einer zu der in der Getriebeeinrichtung 3 auszulegenden vierten Übersetzung "4" äquivalenten Synchrondrehzahl größer als ein Schwellwert wird ein geöffneter Betriebszustand des formschlüssigen Schaltelementes F erkannt.

Wird nach Ablauf eines vordefinierten Zeitraumes t7, der zwischen dem Zeitpunkt T1 der Schaltanforderung und einem Zeitpunkt T8 liegt, nach wie vor eine formschlüssige Verbindung im Bereich des abzuschaltenden formschlüssigen Schaltelementes F ermittelt, wird über die Überwachung der Schaltzeit t festgestellt, dass die angeforderte Schaltung aufgrund eines Verspannungszustandes des formschlüssigen Schaltelementes F, der einem Öffnen des abzuschaltenden formschlüssigen Schaltelementes F entgegensteht, nicht innerhalb einer in Abhängigkeit eines aktuellen Betriebszustandes des Fahrzeugantriebsstranges 5 vordefinierten Schaltzeit durchführbar ist.

Bei Vorliegen eines derartigen Überwachungsergebnisses wird ein aktuelles Antriebsmoment m_mot der Antriebsmaschine mittels eines Motoreingriffes me zu einem Zeitpunkt T6 verändert und das Getriebeeingangsmoment auf ein Drehmomentwertniveau geführt, welches einer Differenz aus dem aktuellen Getriebeeingangsmoment oder einem hierzu äquivalenten Drehmomentwert und einem über das zuzuschaltende reibschlüssige und schlupfend betriebene Schaltelement B aktuell führbaren Drehmomentwert plus einem Drehmoment-Offsetwert entspricht und zu dem das abzuschaltende formschlüssige Schaltelement F zumindest für eine begrenzten Zeitraum in einem wenigstens annähernd lastfreien Betriebszustand vorliegt und mit hoher Wahrscheinlichkeit in seinen geöffneten Betriebszustand übergeht.

Das aktuelle Getriebeeingangsmoment wird hierfür auf Basis des aktuellen Drehmomentes der Antriebsmaschine 2 vor dem Motoreingriff bestimmt. Falls der Fahrzeugantriebsstrang 5 mit einem dem Getriebeeingang vorgeschalteten hydrodynamischen Drehmomentwandler ausgebildet ist, wird der Motoreingriff me an die reale Ausführung des Fahrzeugantriebsstranges beispielsweise rechnerisch entsprechend angepasst.

Über den in die Bestimmung des Niveaus des Motoreingriffs einfließenden Drehmoment-Offsetwert wird gewährleistet, dass sich im Bereich des formschlüssigen Schaltelementes auf jeden Fall zumindest für einen kurzen Zeitraum ein wenigstens annähernd lastfreier Betriebszustand einstellt, zu dem das formschlüssige Schaltelement F mit geringen Schaltkräften in den geöffneten Betriebszustand überführbar ist.

Zusätzlich wird der Betätigungsdruck des zuzuschaltenden reibschlüssigen Schaltelementes B vorliegend zum Zeitpunkt T6 sprungartig reduziert und der Verspannungszustand im Bereich des abzuschaltenden formschlüssigen Schaltelementes F verringert.

Zu einem zeitlich auf den Zeitpunkt T6 folgenden Zeitpunkt T5 werden die beiden formschlüssig ineinander eingreifenden Schaltelementhälften des formschlüssigen Schaltelementes F in einer das formschlüssige Schaltelement F öffnenden Richtung relativ zueinander bewegt. Ein Schaltwegverlauf S des abzuschaltenden formschlüssigen Schaltelementes F zwischen einer ersten Schaltstellung S1 des formschlüssigen Schaltelementes F, in der das formschlüssige Schaltelement F vollständig geschlossen ist, und einer zweiten Schaltstellung S2, in der das formschlüssige Schaltelement F vollständig geöffnet ist, ist in Fig. 4 ebenfalls näher gezeigt.

Bei dem den in Fig. 4 dargestellten Verläufen zugrunde liegenden Betriebszustandsverlauf ist das abzuschaltende formschlüssige Schaltelement F aufgrund des Motoreingriffs und der Absenkung der Übertragungsfähigkeit des zuzuschaltenden reibschlüssigen Schaltelementes B zu einem auf den Zeitpunkt T5 folgenden Zeitpunkt T9 vollständig geöffnet und liegt in seiner zweiten Schaltstellung S2 vor.

Mit Ermittlung des geöffneten Betriebszustandes des abzuschaltenden formschlüssigen Schaltelementes F wird der Motoreingriff me wieder zurückgenommen und auf das Drehmoment m_mot der Antriebsmaschine 2 auf das vom Motorsteuergerät vorgegebene betriebszustandsabhängige Niveau geführt. Gleichzeitig wird der Betätigungsdruck p_B des zuzuschaltenden reibschlüssigen Schaltelementes ab dem Zeitpunkt T9 während einer zu einem Zeitpunkt T10 endenden dritten Druckrampe innerhalb der vordefinierten Schaltzeit auf das Schließdruckniveau geführt, zu dem das zuzuschaltende reibschlüssige Schaltelement B vollständig geschlossen ist und die angeforderte Schaltung beendet ist.

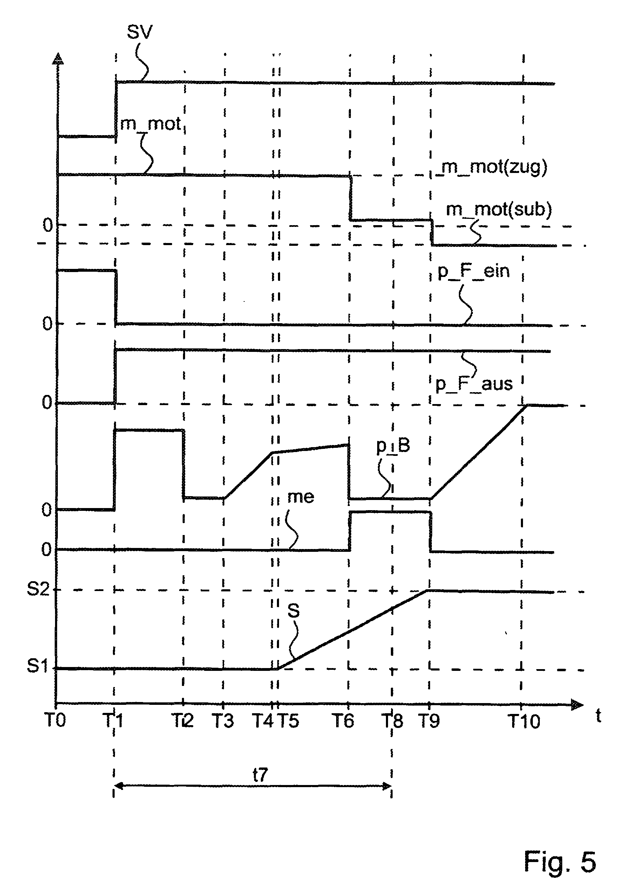

Der den in Fig. 5 dargstellten Verläufen der Betriebsparameter des Fahrzeugantriebsstranges zugrunde liegende Betriebszustandsverlauf entspricht bis zum Zeitpunkt T6 im Wesentlichen dem zu Fig. 4 beschriebenen Betriebszustandsverlauf, wobei der Zeitpunkt T5, ab dem das formschlüssige Schaltelement F geöffnet wird, zeitlich vor dem Zeitpunkt T6 liegt. Zum Zeitpunkt T6 findet im Fahrzeugantriebsstrang 5, beispielsweise aufgrund einer fahrerseitigen Wunschvorgabe, vor Ablauf des definierten Zeitraumes t7 ein Lastwechsel vom Zugbetrieb in den Schubbetrieb des Fahrzeuges statt, weshalb das Antriebsmoment m_mot der Antriebsmaschine 2 von einem positiven Zug-Drehmomentwert m_mot(zug) sprungartig auf einen negativen Schub-Drehmomentwert m_mot(sub) absinkt.

Da der Zug-Drehmomentwert m_mot(zug) im vorliegenden Fall größer als der Schub-Drehmomentwert m_mot(sub) des Antriebsmomentes m_mot der Antriebsmaschine 2 ist, liegt das bis zum Lastwechsel schlupfend betriebene reibschlüssige Schaltelement B nach dem Lastwechsel zum Zeitpunkt T6 unter Umständen mit einer zu hohen Übertragungsfähigkeit vor. Aus diesem Grund besteht die Möglichkeit, dass das reibschlüssige Schaltelement B bei noch geschlossenem formschlüssigem Schaltelement F in seinen geschlossenen Betriebszustand übergeht und in der Getriebeeinrichtung 3 ein unerwünscht hohes Verspannmoment im Bereich der formschlüssigen Verbindung des formschlüssigen Schaltelementes F vorliegt und das formschlüssige Schaltelement F nicht öffenbar ist.

Das bedeutet, dass der Lastwechsel im Fahrzeugantriebsstrang 5 einen für das Öffnen des formschlüssigen Schaltelementes innerhalb einer vordefinierten Schaltzeit ungünstigen Betriebszustandsverlauf verursacht, dem bereits vor Ablauf des definierten Zeitraumes t7 entsprechend entgegenzuwirken ist.

Dies resultiert aus der Tatsache, dass zum Öffnen des formschlüssigen Schaltelementes F zu Beginn einer angeforderten Schaltung zunächst das über den Fahrzeugantriebsstrang 5 zu führende Drehmoment in der vorbeschriebenen Art und Weise vom zuzuschaltenden reibschlüssigen Schaltelement B zu übernehmen ist. Hierfür wird das reibschlüssige Schaltelement zwischen den Zeitpunkten T1 bis T6 mit Betätigungsdruck p_B bzw. mit der zum Aufbau der Übertragungsfähigkeit erforderlichen Betätigungskraft beaufschlagt.

Während das reibschlüssige Schaltelement B mit der für die Lastübernahme notwendigen Betätigungskraft bzw. mit dem hierfür erforderlichen Druckniveau beaufschlagt wird, wird das formschlüssige Schaltelement F ab dem Zeitpunkt T1 in Öffnungsrichtung betätigt. Da zum Zeitpunkt T6 der Lastwechsel vom Zugbetrieb in den Schubbetrieb des Fahrzeugantriebstranges 5 stattfindet, wechselt das im Fahrzeugantriebsstrang 5 zu führende Drehmoment das Vorzeichen von plus nach minus.

Die bis zum Lastwechselzeitpunkt T6 nahezu lastfreie formschlüssige Verbindung im Bereich des formschlüssigen Schaltelementes F wird aufgrund des Lastwechsels im Fahrzeugantriebsstrang 5 wieder belastet. Die Belastung im Bereich des abzuschaltenden formschlüssigen Schaltelementes F entspricht der Summe aus dem im Bereich der Antriebsmaschine 2 abgestützten Schubmoment m_mot(sub) bzw. dem dazu äquivalenten Getriebeeingangsmoment und dem über das reibschlüssige Schaltelement B aktuell führbaren Drehmomentwert. Somit liegt im Bereich des abzuschaltenden formschlüssigen Schaltelementes F ein Verspannungsmoment an, das das vollständige Öffnen des formschlüssigen Schaltelementes F verhindert. Die angeforderte Schaltung ist deshalb nicht innerhalb der vordefinierten Schaltzeit durchführbar. Da der Lastwechsel im Fahrzeugantriebsstrang 5 vorliegend zum Zeitpunkt T6 ergeht, der zeitlich vor dem Zeitpunkt T8 liegt, wird bereits zum Zeitpunkt T6 der vorbeschriebene Motoreingriff me durchgeführt.

Gleichzeitig wird der Betätigungsdruck p_B des formschlüssigen Schaltelementes B zum Zeitpunkt T6 vorliegend sprungartig, d. h. schnellstmöglich auf ein dem aktuellen Getriebeeingangsmoment entsprechendes Drehmomentwertniveau eingestellt, damit das reibschlüssige Schaltelement B weiterhin schlupfend betrieben wird und ein Verspannen im Bereich der Getriebeeinrichtung 3 sicher vermieden wird. Zur weiteren Entlastung des abzuschaltenden formschlüssigen Schaltelementes F wird vorliegend ein positiver Motoreingriff me zum Abbau des am formschlüssigen Schaltelement F anliegenden Drehmomentes ausgeführt, weshalb der Verlauf des Drehmomentes m_mot der Antriebsmaschine 2 zum Zeitpunkt T6 nicht auf das Drehmomentwertniveau m_mot(sub) des Schubbetriebes sondern auf ein darüber liegendes Drehmomentwertniveau eingestellt wird.

Zum Zeitpunkt T9 liegt das formschlüssige Schaltelement in seiner zweiten Schaltstellung S2 vor und ist somit vollständig geöffnet. Der Motoreingriff me wird deshalb zum Zeitpunkt T9 wieder zurückgenommen und das Drehmoment der Antriebsmaschine 2 sinkt auf das angeforderte Schubmoment m_mot(sub) ab.

Nach dem Zeitpunkt T9, zu dem der geöffnete Betriebszustand des abzuschaltenden formschlüssigen Schaltelementes F verifiziert wird, wird der Betätigungsdruck p_B des zuzuschaltenden reibschlüssigen Schaltelementes B über die dritte Druckrampe bis zum Zeitpunkt T10 auf das Schließdruckniveau angehoben, zu dem das reibschlüssige Schaltelement B vollständig geschlossen und die angeforderte Schaltung innerhalb der vordefinierten Schaltzeit beendet ist.

**Bezugszeichen**

| | |
|---|---|
| "1" bis "9" | Übersetzung für Vorwärtsfahrt |
| A bis F | Schaltelement |
| 1 | Abtrieb |
| 2 | Abtriebswelle |
| 3 | Antriebsmaschine |
| 4 | Antriebswelle |
| 5 | Fahrzeug |
| 6 | Fahrzeugantriebsstrang |
| 7 | Getriebeeinrichtung |
| m_mot(sub) | Schub-Drehmomentwertniveau |
| m_mot(zug) | Zug-Drehmomentwertniveau |
| me | Motoreingriff |
| p_B | Betätigungsdruck des reibschlüssigen Schaltelementes B |
| p_F_ein | Betätigungsdruckkomponente des formschlüssigen Schaltelementes F |
| p_F_aus | Betätigungsdruckkomponente des formschlüssigen Schaltelementes F |
| P1 bis P4 | Planetenradsatz |
| "R" | Übersetzung für Rückwärtsfahrt |
| S | Schaltwegverlauf |
| S1 | erste Schaltstellung |
| S2 | zweite Schaltstellung |
| SV | Schaltverlauf |
| t | Zeit |
| T0 bis T10 | diskreter Zeitpunkt |
| t7 | vordefinierter Zeitraum |

## Patentansprüche

1. Verfahren zum Betreiben eines Fahrzeugantriebsstranges (5) mit einer Antriebsmaschine (2) und einer Getriebeeinrichtung (3) während einer Schaltung in der Getriebeeinrichtung (3), bei der wenigstens ein formschlüssiges Schaltelement (F) abgeschaltet und zumindest ein reibschlüssiges Schaltelement (B) zugeschaltet wird, wobei zum Zeitpunkt (T1) der Schaltanforderung eine Schaltzeitüberwachung sowie eine Überwachung einer Getriebeeingangsdrehzahl oder einer hierzu äquivalenten Drehzahl gestartet wird, wobei bei einer Abweichung der überwachten Drehzahl von einer zu der in der Getriebeeinrichtung (3) auszulegenden Übersetzung ("4") äquivalenten Synchrondrehzahl ein Öffnen des formschlüssigen Schaltelementes (F) erkannt wird, **dadurch gekennzeichnet, dass** bei Ermitteln eines geschlossenen Betriebszustandes des abzuschaltenden formschlüssigen Schaltelementes (F) nach Ablauf eines vordefinierten Zeitraumes (t7) ausgehend vom Zeitpunkt (T1) der Schaltanforderung ein aktuelles Antriebsmoment (m_mot) der Antriebsmaschine (2) während eines Motoreingriffes (me) auf ein Drehmomentwertniveau geführt wird, welches einer Differenz aus dem aktuellen Getriebeeingangsmoment oder einem hierzu äquivalenten Drehmomentwert und einem über das zuzuschaltende reibschlüssigen und schlupfend betriebene Schaltelement (B) aktuell führbaren Drehmomentwert plus einem Drehmoment-Offsetwert entspricht und zu dem das zu öffnende formschlüssige Schaltelement (F) zumindest für einen kurzen Zeitraum in einen wenigstens annähernd lastfreien Betriebszustand übergeht, wobei die Übertragungsfähigkeit des zuzuschaltenden reibschlüssigen Schaltelementes (B) bei geschlossenem formschlüssigen Schaltelement (F) im Zugbetrieb des Fahrzeugantriebsstranges (5) auf ein zu dem Getriebeeingangsmoment äquivalentes Zug-Drehmomentwertniveau (m_mot(zug)) geführt wird und bei Auftreten eines Lastwechsels im Fahrzeugantriebsstrang (5) während der Schaltung auf ein zu dem aktuellen Getriebeeingangsmoment äquivalentes Schub-Drehmomentwertniveau (m_mot(sub)) eingestellt wird, und wobei das reibschlüssige Schaltelement (B) zumindest bei geschlossenem formschlüssigen Schaltelement (F) schlupfend betrieben wird.

2. Verfahren nach Anspruch 1, **dadurch gekennzeichnet, dass** die Übertragungsfähigkeit des reibschlüssigen Schaltelementes (B) bei Vorliegen einer Schaltanforderung bei geschlossenem formschlüssigen Schaltelement (F) wenigstens annähernd auf ein dem Getriebeeingangsmoment entsprechendes Niveau angehoben wird, zu dem das reibschlüssige Schaltelement (B) schlupfend betrieben wird.

3. Verfahren nach Anspruch 1 oder 2, **dadurch gekennzeichnet, dass** das aktuelle Getriebeeingangsmoment über ein aktuelles Drehmoment (m_mot) der Antriebsmaschine (2) bestimmt wird.

4. Verfahren nach einem der Ansprüche 1 bis 3, **dadurch gekennzeichnet, dass** die Übertragungsfähigkeit des zuzuschaltenden reibschlüssigen Schaltelementes (B) bei Auftreten eines Lastwechsels im Fahrzeugantriebsstrang (5) auf ein vorzugsweise wenigstens annähernd dem aktuellen Getriebeeingangsmoment entsprechendes Drehmomentwertniveau eingestellt und das reibschlüssige Schaltelement (B) schlupfend betrieben wird.

5. Verfahren nach einem der Ansprüche 1 bis 4, **dadurch gekennzeichnet, dass** der Drehmoment-Offsetwert zur Einhaltung einer vordefinierten Schaltzeit, innerhalb der die angeforderte Schaltung durchzuführen ist, in Abhängigkeit des Betriebszustandes des Fahrzeugantriebsstranges (5) variiert wird.

6. Verfahren nach einem der Ansprüche 1 bis 5, **dadurch gekennzeichnet, dass** bei Erkennen eines geöffneten Betriebszustandes des formschlüssigen Schaltelementes (F) das reibschlüssige Schaltelement (B) in einen vollständig geschlossenen Betriebszustand überführt wird.

7. Verfahren nach einem der Ansprüche 1 bis 6, dadurch gekenntzeichnet, dass der Motoreingriff bei Erkennen eines geöffneten Betriebszustandes des formschlüssigen Schaltelementes zurückgenommen wird.

8. Verfahren nach Anspruch 7, **dadurch gekennzeichnet, dass** das Drehmoment (m_mot) der Antriebsmaschine (2) nach Beendigung des Motoreingriffs (me) auf ein Drehmomentwertniveau geführt wird, welches einem aktuell von einem Motorsteuergerät vorgegebenen Drehmomentwertniveau entspricht.

9. Verfahren nach einem der Ansprüche 1 bis 8, **dadurch gekennzeichnet, dass** die Schaltung eine Lastschaltung ist.

## Claims

1. Method for operating a vehicle drive train (5) having a drive machine (2) and a transmission device (3) during a shifting operation in the transmission device (3) during which at least one positively locking shifting element (F) is deactivated and at least one frictionally locking shifting element (B) is activated, wherein at the time (T1) of the shifting request monitoring of the shifting time and monitoring of a transmission input rotational speed or a rotational speed equivalent thereto is started, wherein in the case of deviation of the monitored rotational speed from a synchronous rotational speed which is equivalent to the transmission ration ("4") which is to be configured in the transmission device (3), opening of the positively locking shifting element (F) is detected, **characterized in that** when a closed operating state of the positively locking shifting element (F) which is to be deactivated is determined, at the expiry of a predefined time period (t7) starting from the time (T1) of the shifting request a current drive torque (m_mot) of the drive machine (2) is adjusted, during an engine intervention (me) to a torque value level which corresponds to a difference between the current transmission input torque, or a torque value equivalent thereto, and a torque value which is to be adjusted at that particular time by means of the frictionally locking shifting element (B) which is to be activated and which is operated in a slipping fashion, plus a torque offset value, at which drive torque (m_mot) the positively locking shifting element (7) which is to be opened changes, at least for a brief time period, into an at least approximately load-free operating state, wherein the transmission capability of the frictionally locking shifting element (B) which is to be activated is adjusted, with the frictionally locking shifting element (F) closed in the traction mode of the vehicle drive train (5), to a traction torque value level (m_mot(zug)) which is equivalent to the transmission input torque, and when a load change occurs in the vehicle drive train (5) during the shifting operation, adjustment is carried out to an overrun torque value level (m_mot(sub)) which is equivalent to the current transmission input torque, and wherein the frictionally locking shifting element (B) is operated in a slipping fashion at least when the positively locking shifting element (F) is closed.

2. Method according to Claim 1, **characterized in that** when a shifting request is present with the positively locking shifting element (F) closed, the transmission capability of the frictionally locking shifting element (B) is raised at least approximately to a level which corresponds to the transmission input torque and at which the frictionally locking shifting element (B) is operated in a slipping fashion.

3. Method according to Claim 1 or 2, **characterized in that** the current transmission input torque is determined by means of a current torque (m_mot) of the drive machine (2).

4. Method according to one of Claims 1 to 3, **characterized in that**, when a load change occurs in the vehicle drive train (5), the transmission capability of the frictionally locking shifting element (B) which is to be activated is set to a torque value level which preferably corresponds at least approximately to the current transmission input torque, and the frictionally locking shifting element (B) is operated in a slipping fashion.

5. Method according to one of Claims 1 to 4, **characterized in that**, in order to maintain a predefined shifting time within which the requested shifting operation is to be carried out, the torque offset value is varied as a function of the operating state of the vehicle drive train (5).

6. Method according to one of Claims 1 to 5, **characterized in that**, when an opened operating state of the positively locking shifting element (F) is detected, the frictionally locking shifting element (B) is transferred into a completely closed operating state.

7. Method according to one of Claims 1 to 6, **characterized in that** when an opened operating state of the frictionally locking shifting element is detected, the engine intervention is reduced.

8. Method according to Claim 7, **characterized in that** after the ending of the engine intervention (me), the torque (m_mot) of the drive machine (2) is adjusted to a torque value level which corresponds to a torque value level which is currently predefined by an engine control unit.

9. Method according to one of Claims 1 to 8, **characterized in that** the shifting operation is a power shifting operation.

## Revendications

1. Procédé pour faire fonctionner une chaîne cinématique de véhicule (5) comprenant un moteur d'entraînement (2) et un dispositif de transmission (3) pendant un changement de vitesse dans le dispositif de transmission (3), dans lequel dispositif de transmission au moins un élément de changement de vitesse (F) à engagement positif est désenclenché et au moins un élément de changement de vitesse (B) à engagement par friction est connecté, à l'instant (T1) de la demande de changement de vitesse, un contrôle du temps de changement de vitesse ainsi qu'un contrôle d'une vitesse de rotation d'entrée de la transmission ou d'une vitesse de rotation équivalente étant amorcé, et dans le cas d'un écart entre la vitesse de rotation contrôlée et une vitesse de rotation synchrone équivalente au rapport de transmission ("4") à désenclencher dans le dispositif de transmission (3), une ouverture de l'élément de changement de vitesse (F) à engagement positif étant reconnue, **caractérisé en ce que** lors de la détection d'un état de fonctionnement fermé de l'élément de changement de vitesse (F) à engagement positif à désenclencher après l'écoulement d'une période de temps prédéfinie (t7), à partir de l'instant (T1) de demande de changement de vitesse, un couple d'entraînement actuel (m_mot) du moteur d'entraînement (2) est amené, pendant une intervention du moteur (me), à un niveau de valeur de couple qui correspond à une différence entre le couple d'entrée de transmission actuel ou une valeur de couple équivalente et une valeur de couple, pouvant être amenée actuellement par le biais de l'élément de changement de vitesse (B) à engagement par friction à enclencher, et fonctionnant en glissement, plus une valeur de décalage de couple, et auquel niveau de valeur de couple l'élément de changement de vitesse (F) à engagement positif à ouvrir passe au moins pendant un court intervalle de temps dans un état de fonctionnement au moins approximativement sans charge, la capacité de transfert de l'élément de changement de vitesse (B) à engagement par friction à enclencher lorsque l'élément de changement de vitesse (F) à engagement positif est fermé, pendant le mode de fonctionnement en traction de la chaîne cinématique du véhicule (5), étant amenée à un niveau de valeur de couple de traction (m_mot(zug)) équivalent au couple d'entrée de transmission et en cas d'apparition d'un changement de charge dans la chaîne cinématique du véhicule (5) pendant le changement de vitesse, un niveau de valeur de couple en poussée (m_mot(sub)) équivalent au couple d'entrée de transmission actuel étant ajusté, et l'élément de changement de vitesse (B) à engagement par friction étant entraîné en glissement au moins lorsque l'élément de changement de vitesse (F) à engagement positif est fermé.

2. Procédé selon la revendication 1, **caractérisé en ce que** la capacité de transfert de l'élément de changement de vitesse (B) à engagement par friction, en présence d'une demande de changement de vitesse, lorsque l'élément de changement de vitesse (F) à engagement positif est fermé, est au moins approximativement augmentée à un niveau correspondant au couple d'entrée de la transmission, auquel niveau l'élément de changement de vitesse (B) à engagement par friction est entraîné en glissement.

3. Procédé selon la revendication 1 ou 2, **caractérisé en ce que** le couple d'entrée de transmission actuel est déterminé par un couple actuel (m_mot) du moteur d'entraînement (2).

4. Procédé selon l'une quelconque des revendications 1 à 3, **caractérisé en ce que** la capacité de transfert de l'élément de changement de vitesse (B) à engagement par friction à enclencher est ajustée à l'apparition d'un changement de charge dans la chaîne cinématique du véhicule (5) à un niveau de valeur de couple correspondant au moins approximativement au couple d'entrée de transmission actuel et l'élément de changement de vitesse (B) à engagement par friction est entraîné en glissement.

5. Procédé selon l'une quelconque des revendications 1 à 4, **caractérisé en ce que** la valeur de décalage de couple est modifiée en fonction de l'état de fonctionnement de la chaîne cinématique du véhicule (5) pour conserver un temps de changement de vitesse prédéfini à l'intérieur duquel le changement de vitesse demandé doit être effectué.

6. Procédé selon l'une quelconque des revendications 1 à 5, **caractérisé en ce que** lors de la reconnaissance d'un état de fonctionnement ouvert de l'élément de changement de vitesse (F) à engagement positif, l'élément de changement de vitesse (B) à engagement par friction est transféré dans un état de fonctionnement complètement fermé.

7. Procédé selon l'une quelconque des revendications 1 à 6, **caractérisé en ce que** l'engagement du moteur est diminué lors de la reconnaissance d'un état de fonctionnement ouvert de l'élément de changement de vitesse à engagement positif.

8. Procédé selon la revendication 7, **caractérisé en ce que** le couple (m_mot) du moteur d'entraînement (2) est amené après la fin de l'engagement du moteur (me) à un niveau de valeur de couple qui correspond à un niveau de valeur de couple prédéfini actuellement par un appareil de commande du moteur.

9. Procédé selon l'une quelconque des revendications 1 à 8, **caractérisé en ce que** le changement de vitesse est un changement de vitesse en charge.
